# EUROPÄISCHE PATENTSCHRIFT

(11) **EP 2 659 538 B1**
(45) Veröffentlichungstag und Bekanntmachung des Hinweises auf die Patenterteilung: **04.07.2018**
(21) Anmeldenummer: 11782143.9
(22) Anmeldetag: 14.11.2011
(51) Int. Cl.: H01M 10/04, H01M 2/26

(54) **BATTERIEZELLE MIT REDUZIERTER ZELLINDUKTIVITÄT**
BATTERY CELL HAVING REDUCED CELL INDUCTANCE
CELLULE DE BATTERIE À INDUCTANCE CELLULAIRE RÉDUITE

(30) Priorität: 29.12.2010 DE 102010064301
(43) Veröffentlichungstag der Anmeldung: 06.11.2013
(73) Patentinhaber: Robert Bosch GmbH, 70442 Stuttgart (DE)
(72) Erfinder: KESSLER, Martin, 73527 Schwaebisch Gmuend (DE); FEUERSTACK, Peter, 71642 Ludwigsburg (DE); WEISSENBORN, Erik, 70374 Stuttgart (DE)
(86) Internationale Anmeldenummer: PCT/EP2011/070009
(87) Internationale Veröffentlichungsnummer: WO 2012/089393

(56) Entgegenhaltungen:
- EP-A1- 2 204 871
- WO-A1-2010/142014
- US-A1- 2004 166 406
- US-A1- 2005 191 545

## Beschreibung

Die Erfindung betrifft eine Batteriezelle, insbesondere eine wiederaufladbare Batteriezelle.

### Stand der Technik

In den meisten Einsatzgebieten von Batteriezellen wird, abgesehen von einem geringen Ripple-Anteil, näherungsweise Gleichstrom entnommen beziehungsweise eingespeist.

Aus der US 5 642 275 A ist ein Batteriesystem mit integrierter Wechselrichterfunktion bekannt, bei dem eine Reihe von Leistungsschaltern mit separaten Gleichspannungsquellen in Form von Batterien vorgesehen ist. Derartige Batteriesysteme, welche häufig auch als Multilevel Cascaded Inverter bezeichnet werden, ermöglichen die Realisierung ein- oder mehrphasiger Systeme, welche einen größeren Wirkungsgrad und eine höhere Ausfallsicherheit aufweisen als konventionelle Wechselrichteranordnungen.

Wird ein derartiges Batteriesystem aber zum Beispiel zur Steuerung einer elektrischen Maschine eingesetzt, ist zur Variation der Strangspannung ein schneller Wechsel der Stromführung durch die Gleichspannungsquellen bzw. an den Gleichspannungsquellen vorbei erforderlich. Mit steigendem Wechselanteil des Stroms wächst aber auch der Einfluss der Induktivität der Gleichspannungsquellen und damit bei Einsatz von Batteriemodulen der Einfluss der Induktivität der einzelnen Batteriezellen (Zellinduktivität). Insbesondere führen die Zellinduktivitäten in Kombination mit hohen Strömen bei Schaltvorgängen zu hohen Verlustenergien, welche in den Leistungsschaltern in Wärme umgesetzt werden. Durch das wiederholte Auftreten von Schaltvorgängen führt dies zu hohen Verlustleistungen in den Schaltern und damit zu einem reduzierten Wirkungsgrad des Batteriesystems. Bei serieller Verschaltung der einzelnen Batteriezellen in einem Batteriemodul addieren sich die einzelnen Zellinduktivitäten, was zu einer entsprechend höheren Verlustleistung führt. In einigen Anwendungsfällen kann ein zu hoher induktiver Anteil der Impedanz der Batteriezellen auch einen zusätzlichen Pufferkondensator erforderlich machen.

Einhergehend mit verteilten Zellinduktivitäten werden bei jedem Schaltvorgang auch elektromagnetische Felder emittiert, welche ohne Abhilfemaßnahmen zu Störungen benachbarter Elektronik-Komponenten führen könnten, so dass häufig aufwendige zusätzliche Schaltungsmaßnahmen zur Einhaltung von EMV-Vorschriften (EMV = Elektromagnetische Verträglichkeit) erforderlich sind.

US 2005/191545 A1 offenbart eine Elektrodenanordnung, welche durch jeweiliges Überlagern einer plattenförmigen Kathode 1, eines plattenförmigen Separators 3 und einer doppelseitigen plattenförmigen Anode 8 zum Ausbilden einer Stapefstruktur 10 sowie mehrmaligem Falten der Stapelstruktur ausgebildet, wobei die erste Faltung eine Faltung der Kathode um im Wesentlichen 180°, um die jeweilige obere und untere aktive Anodenoberfläche zu umgeben. Die Mehrzahl von Faltungen können eine oder mehrere nachfolgende parallele Faltungen um die Faltungslinie D-D, welche sich senkrecht zur ursprünglichen Länge der Stapelstruktur erstreckt, aufweisen, sodass die Gesamtlänge mit jeder Faltung halbiert wird.

US 2004/166406 A1 offenbart eine Batterie, welche einen Elektrodenkörper aufweist, der aus einer Lamination einer plattenartigen positiven Elektrode und einer plattenartigen negativen Elektrode durch einen Separator ausgebildet ist. Ein Batteriehülsenkörper weist an einem Umfangsabschnitt eine Aussparung auf, welche mit einem Flanschabschnitt ausgebildet ist, um zumindest einen Teil des Elektrodenkörpers zusammen mit einem Elektrolyten aufzunehmen. Des Weiteren weist die Batterie eine Metallabdeckung auf, welche mit einem Umfangsabschnitt ausgebildet ist, der zum Abdichten einer Öffnung des Hülsenkörpers durch Fügen des Flanschabschnittes und des entsprechenden Umfangsabschnittes ausgebildet ist. Ein Ende jedes Zuführungselementes, welches mit der jeweiligen positiven und negativen Elektrode verbunden ist, ist durch einen Raum aus dem Hülsenkörper ausgeführt, welcher an einem Oberflächenteil des gefügten Flanschabschnittes ausgebildet ist. Der Bereich des Flanschabschnittes um den Ausführungsraum herum ist durch eine Harzklebung abgedichtet.

WO 2010/142014 A1 offenbart eine Batterie aufweisend ein Gehäuse, eine Elektrodenanordnung innerhalb des Gehäuses, wobei die Elektrodenanordnung eine positive und eine negative Elektrode aufweist. Die Elektrodenanordnung weist des Weiteren positive und negative Leiter auf, welche mit den jeweiligen positiven und negativen Elektroden elektrisch verbunden sind. Diese Verbindung ist an einem im Wesentlichen ähnlichen Punkt an der jeweiligen Elektrodenanordnung ausgebildet, sodass Strom in jeweiligen der Richtungen durch die positive und negative Elektrode fließt. Die positiven und negativen Leiter sind eng geführt, sodass diese in naher Umgebung zueinander angeordnet sind.

### Offenbarung der Erfindung

Die vorliegende Erfindung schafft eine Batteriezelle, insbesondere eine wiederaufladbare Batteriezelle, gemäss Anspruch 1.

### Vorteile der Erfindung

Die Gesamtinduktivität eines Batteriemoduls wird einerseits durch die Induktivitäten der einzelnen Batteriezellen (Zellinduktivitäten) und andererseits durch die Induktivität der Verschaltung dieser Batteriezellen bestimmt. Die Erfindung basiert auf der Grundidee, die Verbindungselemente, welche die Elektrodenfolien elektrisch mit dem jeweiligen Polanschluss verbinden auf derselben Stirnseite des Wickels anzuordnen und dort auch mit den Elektrodenfolien zu kontaktieren. Auf diese Weise wird der Abstand und damit die eingeschlossene Fläche zwischen den beiden Polanschlüssen verringert, was zu einer deutlichen Reduzierung der Zellinduktivität führt. Dies wiederum führt zu einer reduzierten Verlustleistung der Leistungsschalter und damit zu einem höheren Wirkungsgrad des Batteriesystems. Der erfindungsgemäße Aufbau der Batteriezelle reduziert auch die Emission von elektromagnetischen Störungen.

Um unerwünschte Wellen-Effekte, Resonanzen oder Reflektionen auf der der ersten Stirnseite gegenüberliegenden zweiten Stirnseite des Wickels zu vermeiden, ist es gemäß einer Ausführungsform der Erfindung vorgesehen, die einzelnen Lagen der ersten Elektrodenfolie und der zweiten Elektrodenfolie auf der der ersten Stirnseite gegenüberliegenden zweiten Stirnseite des Wickels jeweils elektrisch miteinander zu verbinden.

Dies kann auf besonders einfache Weise dadurch erreicht werden, dass der Wickel derart gefaltet ist, dass eine erste Stirnfläche des ehemals ungefalteten Wickels und eine zweite Stirnfläche des ehemals ungefalteten Wickels nach der Faltung benachbart, insbesondere unmittelbar angrenzend aneinander, zu einander zu liegen kommen. So dass die erste Stirnseite des auf diese Weise entstandenen Wickels durch die beiden Stirnflächen gebildet wird. Soll auf eine derartige Faltung verzichtet werden, kann die elektrische Verbindung der Elektrodenfolien aber auch anderweitig, z.B. mit Hilfe eines oder mehrerer separater Kontaktierungselemente erfolgen.

Gemäß der Erfindung sind die Elektrodenfolien versetzt zueinander aufgerollt, so dass die erste Stirnfläche des Wickels durch die Lagen der ersten Elektrodenfolie und die zweite Stirnfläche des Wickels durch die Lagen der zweiten Elektrodenfolie gebildet werden. Die beiden Verbindungselemente sind in diesem Fall flächig ausgestaltet und kontaktieren an jeweils einer Stirnfläche eine Vielzahl von Lagen, insbesondere alle Lagen, der jeweiligen Elektrodenfolie.

In diesem Fall ergibt sich für die Betrachtung des induktiven Anteils der Lagen quasi eine Parallelschaltung, was zu einer entsprechenden Reduzierung der resultierenden Induktivität führt. Im Fall eines Zellwickels einer Batteriezelle, bei dem üblicher Weise einige Meter Folie aufgewickelt werden, führt dies zu einer hohen Anzahl von "parallel geschalteten" Lagen und damit zu einer diesbezüglich vernachlässigbaren parasitären Induktivität. Sowohl die sehr geringe verbleibende Induktivität als auch die gleichmäßige Kontaktierung aller Schichten verhindert darüber hinaus das Auftreten von Wellenausbreitungs-Effekten- Die Kontaktierung aller Schichten ermöglicht zudem einen geringeren Kontaktierungswiderstand und eine homogenere Stromverteilung, was in Summe zu geringeren ohmschen Verlusten führt.

Diese Effekte können noch verstärkt werden, indem die Verbindungselemente die jeweilige Elektrodenfolie jeweils auf der gesamten Stirnfläche des Wickels kontaktieren.

Um auch im Bereich der Polanschlüsse eine niederinduktive Verschaltung zu erreichen, können auch die Polanschlüsse flächig ausgestaltet sein.

Eine fertigungstechnisch besonders einfache Realisierung ist möglich, wenn die Verbindungselemente jeweils einstückig mit den Polanschlüssen ausgebildet sind.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Perspektivdarstellung einer Batteriezelle, wie sie aus dem Stand der Technik bekannt ist,
- Fig. 2: eine schematische Perspektivdarstellung einer erfindungsgemäßen Batteriezelle gemäß einer ersten Ausführungsform,
- Fig. 3: eine schematische Perspektivdarstellung einer erfindungsgemäßen Batteriezelle gemäß einer zweiten Ausführungsform,
- Fig. 4: eine schematische Perspektivdarstellung einer erfindungsgemäßen Batteriezelle gemäß einer dritten Ausführungsform,
- Fig. 5: eine schematische Perspektivdarstellung eines Wickels einer erfindungsgemäßen Batteriezelle gemäß einer vierten Ausführungsform vor der Faltung und der Kontaktierung und
- Fig. 6: eine schematische Perspektivdarstellung einer erfindungsgemäßen Batteriezelle gemäß der vierten Ausführungsform.

In den Figuren sind identische oder funktionsgleiche Komponenten jeweils mit dem gleichen Bezugszeichen gekennzeichnet.

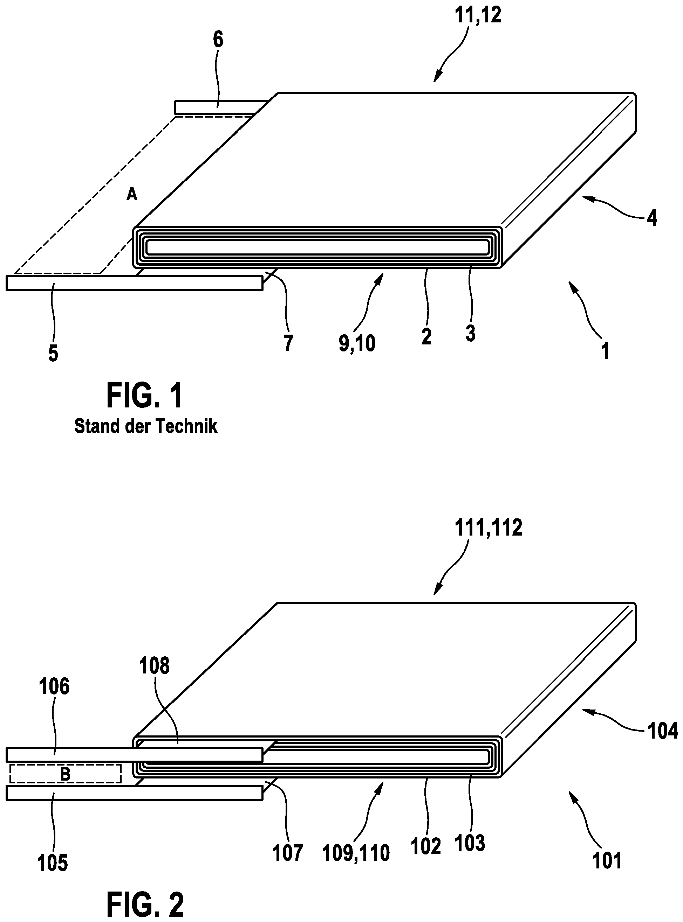

Figur 1 zeigt schematisch eine Batteriezelle 1, wie sie aus dem Stand der Technik bekannt ist. Die Batteriezelle 1 umfasst eine erste Elektrodenfolie 2 und eine zweite Elektrodenfolie 3, welche zusammen mit einem nicht eigens dargestellten dazwischen liegenden Separator zu einem Wickel 4 mit mehreren Lagen aufgerollt sind. Zur Verbindung der Batteriezelle 1 mit einer externen Beschaltung, wie z.B. einer weiteren Batteriezelle oder einem Leistungsschalter, sind ein erster Polanschluss 5 und ein zweiter Polanschluss 6 vorgesehen. Die Polanschlüsse 5 und 6 sind über ein erstes Verbindungselement 7 bzw. ein, auf Grund der perspektivischen Darstellung nicht sichtbares, zweites Verbindungselement elektrisch mit der ersten Elektrodenfolie 2 bzw. der zweiten Elektrodenfolie 3 verbunden. Die Verbindungselemente werden häufig auch als "Tabs" bezeichnet. Das erste Verbindungselement 7 kontaktiert dabei die erste Elektrodenfolie 2 auf einer ersten Stirnfläche 9 des Wickels 4, welche zugleich eine erste Stirnseite 10 des gesamten Wickels 4 bildet. Das zweite Verbindungselement kontaktiert die zweite Elektrodenfolie 2 auf einer der ersten Stirnfläche 9 gegenüberliegenden zweiten Stirnfläche 11 des Wickels 4, welche zugleich eine zweite Stirnseite 12 des gesamten Wickels 4 bildet. Dadurch bildet sich zwischen den beiden Polanschlüssen 5 und 6 eine relativ große Fläche A aus, welche zu einer relativ hohen parasitären Induktivität der Batteriezelle 1 führt.

Figur 2 zeigt schematisch eine erste Ausführungsform einer erfindungsgemäßen Batteriezelle 101, welche insbesondere als wideraufladbare Batteriezelle ausgestaltet sein kann. Die Batteriezelle 101 umfasst wiederum eine erste Elektrodenfolie 102 und eine zweite Elektrodenfolie 103, welche zusammen mit einem nicht eigens dargestellten dazwischen liegenden Separator zu einem Wickel 104 mit mehreren Lagen aufgerollt sind. Zur Verbindung der Batteriezelle 101 mit einer externen Beschaltung sind ein erster Polanschluss 105 und ein zweiter Polanschluss 106 vorgesehen. Die Polanschlüsse 105 und 106 sind auch bei der erfindungsgemäßen Batteriezelle 101 über ein erstes Verbindungselement 107 bzw. ein zweites Verbindungselement 108 elektrisch mit der ersten Elektrodenfolie 102 bzw. der zweiten Elektrodenfolie 103 verbunden. Das erste Verbindungselement 107 kontaktiert wiederum die erste Elektrodenfolie 102 auf einer ersten Stirnfläche 109 des Wickels 104, welche zugleich eine erste Stirnseite 110 des gesamten Wickels 104 bildet. Im Gegensatz zu der aus dem Stand der Technik bekannten Batteriezelle gemäß Figur 1, kontaktiert das zweite Verbindungselement 108 die zweite Elektrodenfolie 102 aber nicht auf einer der ersten Stirnfläche 109 gegenüberliegenden zweiten Stirnfläche 111 des Wickels 104, welche zugleich eine zweite Stirnseite 112 des gesamten Wickels 4 bildet, sondern auf der gleichen Stirnseite 110, auf der auch die erste Elektrodenfolie 102 mit Hilfe des ersten Verbindungselements 107 kontaktiert ist. Dadurch bildet sich zwischen den beiden Polanschlüssen 105 und 106 eine im Vergleich zur Anordnung gemäß Figur 1 deutlich kleinere Fläche B aus, welche zu einer deutlich reduzierten parasitären Induktivität der Batteriezelle 101 führt.

Um unerwünschte Wellen-Effekte, Resonanzen oder Reflektionen auf der zweiten Stirnseite 112 des Wickels zu vermeiden, können die einzelnen Lagen der ersten Elektrodenfolie 102 und der zweiten Elektrodenfolie 103 auf der zweiten Stirnseite 112 des Wickels, z.B. mit Hilfe nicht dargestellter Kontaktelemente jeweils elektrisch miteinander verbunden sein.

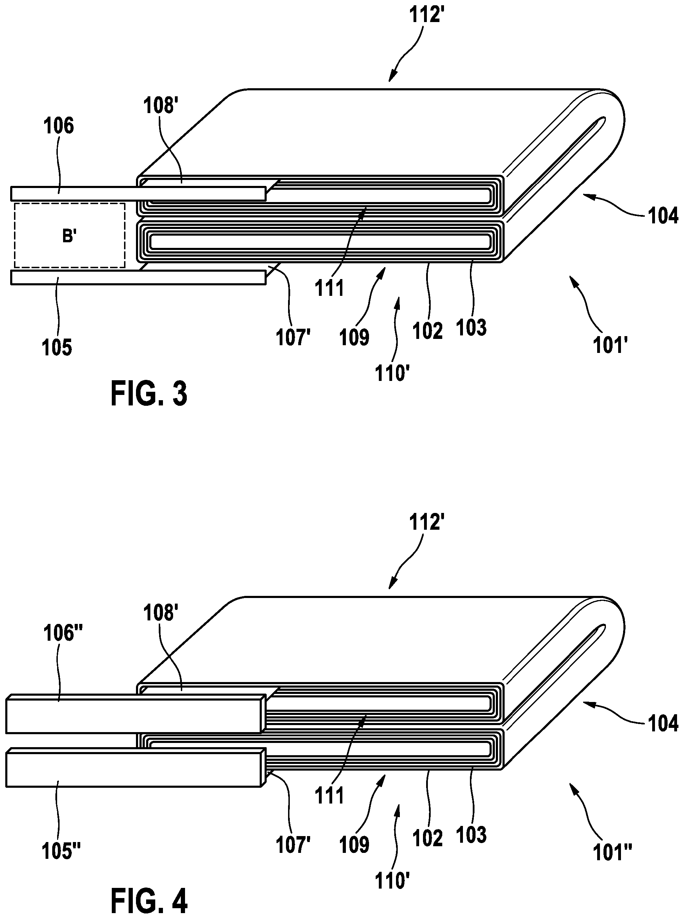

Figur 3 zeigt schematisch eine zweite Ausführungsform einer erfindungsgemäßen Batteriezelle 101', bei welcher die elektrische Verbindung der einzelnen Lagen der ersten Elektrodenfolie 102 und der zweiten Elektrodenfolie 103 auf einer zweiten Stirnseite 112' des Wickels 104, auf welcher die Elektrodenfolien 102, 103 nicht kontaktiert werden, auf besonders elegante Weise realisiert wird. Der Wickel 104 ist dazu derart gefaltet, dass die erste Stirnfläche 109 und die zweite Stirnfläche 111 des Wickels 104 benachbart zueinander, im dargestellten Ausführungsbeispiel sogar unmittelbar aneinander angrenzend zu liegen kommen. Eine erste Stirnseite 110' des Wickels 104 wird in diesem Fall durch die beiden Stirnflächen 109 und 111 gebildet, wohingegen eine zweite Stirnseite 112' des Wickels 104 durch den "Faltrücken" gebildet wird. Die Polanschlüsse 105 und 106 sind auch bei dieser Ausführungsform über ein erstes Verbindungselement 107' bzw. ein zweites Verbindungselement 108' elektrisch mit der ersten Elektrodenfolie 102 bzw. der zweiten Elektrodenfolie 103 verbunden. Analog zur Ausführungsform gemäß Figur 2 kontaktiert das erste Verbindungselement 107' die erste Elektrodenfolie 102 auf der ersten Stirnfläche 109 des Wickels 104. Im Gegensatz zur Ausführungsform gemäß Figur 2 kontaktiert das zweite Verbindungselement 108' die zweite Elektrodenfolie 102 aber auf der zweiten Stirnfläche 111 des Wickels 104. Aufgrund der Faltung des Wickels 104 werden die beiden Elektrodenfolien 102 und 103 aber dennoch in erfindungsgemäßer Weise auf der gleichen, nämlich der ersten Stirnseite 110' des Wickels 104 kontaktiert. Auch bei dieser Ausführungsform bildet sich zwischen den beiden Polanschlüssen 105 und 106 eine im Vergleich zur Anordnung gemäß Figur 1 deutlich kleinere Fläche B' aus, welche zu einer deutlich reduzierten parasitären Induktivität der Batteriezelle 101' führt.

Eine weitere Reduzierung des induktiven Anteils der Impedanz lässt sich gemäß einer dritten Ausführungsform einer erfindungsgemäßen Batteriezelle 101" dadurch erreichen, dass flächig ausgestaltete Polanschlüsse 105" und 106" eingesetzt werden (vgl. Figur 4). Unter flächiger Ausgestaltung sei dabei insbesondere eine Ausführungsform verstanden, bei welcher eine Breite b_{Pol} der Polanschlüsse 105" und 106" größer ist als die Hälfte einer Breite b_{Stirn} einer Stirnfläche 109, 111 des Wickels 104. Bevorzugt entspricht die Breite b_{Pol} der Polanschlüsse 105" und 106" im Wesentlichen der Breite b_{Stirn} der Stirnflächen 109, 111 des Wickels 104.

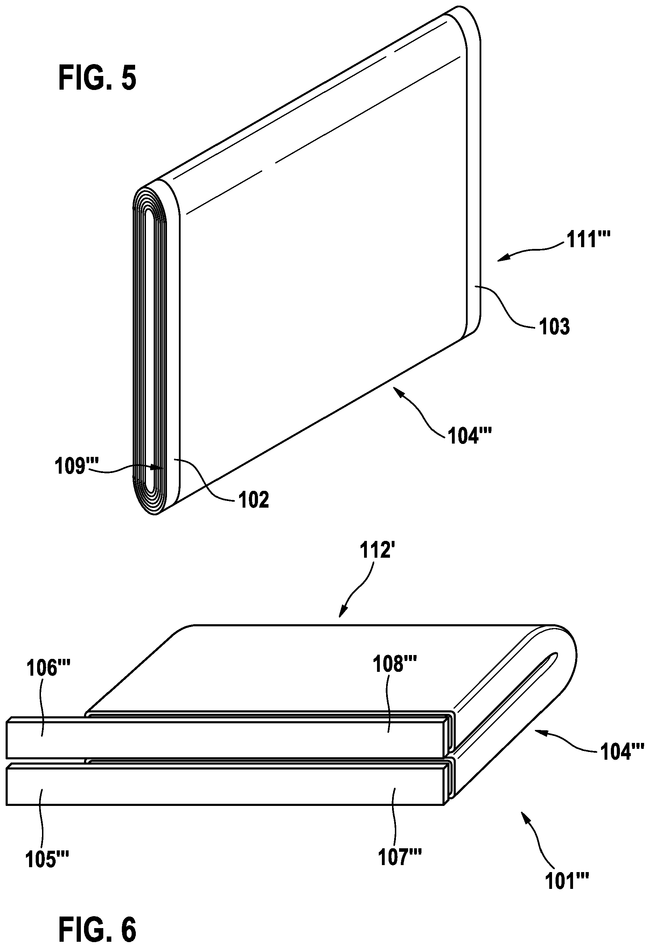

Figur 5 zeigt schematisch einen Wickel 104'" gemäß einer vierten Ausführungsform einer erfindungsgemäßen Batteriezelle 101'" vor der Faltung und der Kontaktierung. Der Wickel 104" unterscheidet sich vom Wickel 104 der vorhergehenden Ausführungsformen dadurch, dass die beiden Elektrodenfolien 102 und 103 versetzt zueinander aufgerollt sind, so dass eine erste Stirnfläche 109'" des Wickels 104"' durch die Lagen der ersten Elektrodenfolie 102 und eine zweite Stirnfläche 111'" des Wickels 104'" durch die Lagen der zweiten Elektrodenfolie 103 gebildet werden.

Wird ein derartiger Wickel 104'" entsprechend der zweiten und dritten Ausführungsform der Erfindung gefaltet, so können Verbindungselemente 107'" und 108'" analog zur dritten Ausführungsform flächig ausgestaltet sein und an jeweils einer Stirnfläche 109'" bzw. 111'" eine Vielzahl von Lagen, insbesondere alle Lagen, der jeweiligen Elektrodenfolie 102 bzw. 103 kontaktieren (vgl. Fig. 5). Die Kontaktfläche kann dabei auch jeweils die gesamten Stirnfläche 109'" bzw. 111'" überspannen. Bei der dargestellten Ausführungsvariante sind die Verbindungselemente 107"' und 108'" einstückig mit jeweils zugehörigen Polanschlüssen 105'" bzw. 106'" ausgebildet.

## Patentansprüche

1. Batteriezelle (101; 101'; 101"; 101"'), insbesondere wiederaufladbare Batteriezelle, mit
- einer ersten Elektrodenfolie (102) und einer zweiten Elektrodenfolie (103), welche zusammen mit einem dazwischen liegenden Separator zu einem Wickel (104; 104'") aufgerollt sind,
- einem ersten (105; 105"; 105"') und einem zweiten Polanschluss (106; 106"; 106'") zum Verbinden der Batteriezelle (101; 101'; 101"; 101"') mit einer externen Beschaltung,
- einem ersten Verbindungselement (107; 107'; 107'"), welches den ersten Polanschluss (105; 105"; 105'") elektrisch mit der ersten Elektrodenfolie (102) verbindet und
- einem zweiten Verbindungselement (108; 108'; 108"'), welches den zweiten
Polanschluss (106; 106"; 106"') elektrisch mit der zweiten Elektrodenfolie (103) verbindet,
wobei die beiden Verbindungselemente (105, 107; 105", 107"; 105"', 107'") die jeweilige Elektrodenfolie (102; 103) auf einer ersten Stirnseite (110; 110') des Wickels kontaktieren und die einzelnen Lagen der ersten Elektrodenfolie (102) und der zweiten Elektrodenfolie (103) auf der der ersten Stirnseite (110; 110') gegenüberliegenden zweiten Stirnseite (112; 112') des Wickels jeweils elektrisch miteinander verbunden sind, wobei der Wickel (104; 104'") derart gefaltet ist, dass die erste Stirnseite (110') durch eine erste Stirnfläche (109; 109'") des Wickels (104; 104"') und eine zweite Stirnfläche (111; 111"')) des Wickels (104; 104"') gebildet wird, welche benachbart zu einander, insbesondere unmittelbar aneinander angrenzend, zu liegen kommen,
**dadurch gekennzeichnet, dass** die Elektrodenfolien (102, 103) versetzt zueinander aufgerollt sind, so dass die erste Stirnfläche (109"') des Wickels (104"') durch die Lagen der ersten Elektrodenfolie (102) und die zweite Stirnfläche (111"') des Wickels (104"') durch die Lagen der zweiten Elektrodenfolie (103) gebildet werden und dass die beiden Verbindungselemente (107"', 108"') flächig ausgestaltet sind und an jeweils einer Stirnfläche (109"'; 111"') eine Vielzahl von Lagen, insbesondere alle Lagen, der jeweiligen Elektrodenfolie (102; 103) kontaktieren.

2. Batteriezelle nach Anspruch 1, **dadurch gekennzeichnet, dass** die Verbindungselemente (107"', 108"') die jeweilige Elektrodenfolie (102; 103) jeweils auf der gesamten Stirnfläche (109"'; 111'") des Wickels (104"') kontaktieren.

3. Batteriezelle nach einem der vorhergehenden Ansprüche, **dadurch gekennzeichnet, dass** die Polanschlüsse (105"', 106"') flächig ausgestaltet sind.

4. Batteriezelle nach einem der vorhergehenden Ansprüche, **dadurch gekennzeichnet, dass** die Verbindungselemente (107"', 108"') jeweils einstückig mit den Polanschlüssen (105"', 106"') ausgebildet sind.

## Claims

1. Battery cell (101; 101'; 101"; 101"') in particular rechargeable battery cell having:
• a first electrode foil (102) and a second electrode foil (103) that together with an interposed separator are rolled up to form a roll (104; 104"'),
• a first terminal connection (105; 105"; 105"') and a second terminal connection (106; 106"; 106"') for connecting the battery cell (101; 101'; 101"; 101"') to external circuitry,
• a first connecting element (107; 107'; 107"') that electrically connects the first terminal connection (105; 105"; 105"') to the first electrode foil (102), and
• a second connection element (108; 108'; 108"') that electrically connects the second terminal connection (106; 106"; 106"') to the second electrode foil (103),
wherein the two connecting elements (105, 107; 105", 107"; 105"', 107"') contact the respective electrode foil (102; 103) on a first end face (110; 110') of the roll and the individual layers of the first electrode foil (102) and the second electrode foil (103) are in each case electrically mutually connected on the second end face (112; 112') that lies opposite the first end face (110; 110'), wherein the roll (104; 104"') is folded in such a manner that the first end face (110') is formed by a first end surface (109; 109"') of the roll (104; 104"') and a second end surface (111; 111"') of the roll (104; 104"'), which end faces come to lie adjacent to one another, in particular directly adjacent to one another,
**characterized in that** the electrode foils (102, 103) are rolled up offset to one another, so that the first end surface (109"') of the roll 104"') is formed by the layers of the first electrode foil (102) and the second end surface (111"') of the roll (104"') is formed by the layers of the second electrode foil (103) and that the two connecting elements (107"', 108"') are embodied in a planar manner and a plurality of layers, in particular all the layers, of the respective electrode foil (102; 103) contact in each case an end surface (109"'; 111"').

2. Battery cell according to Claim 1, **characterized in that** the connecting elements (107"', 108"') contact the respective electrode foil (102; 103) in each case on the entire end surface (109"'; 111"') of the roll (104"').

3. Battery cell according to any one of the preceding claims, **characterized in that** the terminal connections (105"', 106"') are embodied in a planar manner.

4. Battery cell according to any one of the preceding claims, **characterized in that** the connecting elements (107"', 108"') are embodied in each case as one part with the terminal connections (105"', 106"').

## Revendications

1. Cellule de batterie (101 ; 101' ; 101" ; 101"'), en particulier cellule de batterie rechargeable, avec
- une première feuille d'électrode (102) et une deuxième feuille d'électrode (103), lesquelles sont enroulées, ensemble avec un séparateur situé entre elles, en un bobinage (104 ; 104"'),
- une première (105 ; 105" ; 105"') et une deuxième borne polaire (106 ; 106" ; 106"') pour raccorder la cellule de batterie (101 ; 101' ; 101" ; 101"') à un câblage externe,
- un premier élément de connexion (107 ; 107' ; 107"') qui raccorde électriquement la première borne polaire (105 ; 105" ; 105"') à la première feuille d'électrode (102) et
- un deuxième élément de connexion (108 ; 108', 108"') qui raccorde électriquement la deuxième borne polaire (106 ; 106" ; 106"') à la deuxième feuille d'électrode (103),
dans laquelle les deux éléments de connexion (105, 107 ; 105", 107" ; 105"', 107"') contactent la feuille d'électrode (102 ; 103) respective sur un premier côté frontal (110 ; 110') du bobinage, et les couches individuelles de la première feuille d'électrode (102) et de la deuxième feuille d'électrode (103). sont respectivement raccordées électriquement entre elles sur le deuxième côté frontal (112 ; 112') du bobinage situé en vis-à-vis du premier côté frontal (110 ; 110'), dans laquelle le bobinage (104 ; 104"') est plié de telle sorte que le premier côté frontal (110') est formé par une première surface frontale (109 ; 109"') du bobinage (104 ; 104"') et une deuxième surface frontale (111 ; 111"') du bobinage (104 ; 104"'), lesquelles arrivent à reposer au voisinage l'une de l'autre, en particulier de manière directement adjacente l'une de l'autre,
**caractérisée en ce que** les feuilles d'électrode (102, 103) sont enroulées de manière décalée entre elles de sorte que la première surface frontale (109"') du bobinage (104"') est formée par les couches de la première feuille d'électrode (102) et la deuxième surface frontale (111"') du bobinage (104"'), par les couches de la deuxième feuille d'électrode (103), et que les deux éléments de connexion (107"', 108"') sont réalisés de manière plane et contactent, respectivement au niveau d'une surface frontale (109"' ; 111"'), une pluralité de couches, en particulier toutes les couches de la feuille d'électrode (102 ; 103) respective.

2. Cellule de batterie selon la revendication 1, **caractérisée en ce que** les éléments de connexion (107"', 108"') contactent la feuille d'électrode (102 ; 103) respective, respectivement sur l'ensemble de la surface frontale (109"' ; 111"') du bobinage (104"').

3. Cellule de batterie selon l'une des revendications précédentes, **caractérisée en ce que** les bornes polaires (105"', 106"') sont réalisées de manière plane.

4. Cellule de batterie selon l'une des revendications précédentes, **caractérisée en ce que** les éléments de connexion (107'" ; 108"') sont respectivement réalisés d'une seule pièce avec les bornes polaires (105"', 106"').
